# FASCICULE DE BREVET EUROPEEN

(11) **EP 2 403 811 B1**
(45) Date de publication et mention de la délivrance du brevet: **19.12.2012**
(21) Numéro de dépôt: 10714922.1
(22) Date de dépôt: 04.03.2010
(51) Int. Cl.: C03B 23/025, C03B 23/027, C03B 35/20, C03B 27/044, C03B 40/00

(54) **FORMAGE D'UN VITRAGE COMPRENANT UNE OUVERTURE**
FORMGESTALTUNG EINER VERGLASUNG MIT EINER ÖFFNUNG
SHAPING OF A GLAZING WITH OPENING

(30) Priorité: 05.03.2009 FR 0951382
(43) Date de publication de la demande: 11.01.2012
(73) Titulaire: Saint-Gobain Glass France, 92400 Courbevoie (FR)
(72) Inventeur: OLIVIER, Thierry, F-60150 Thourotte (FR); BERTHE, Frédéric, F-60200 Compiegne (FR); LABROT, Michael, 52072 Aachen (DE)
(74) Mandataire: Colombier, Christian
(86) Numéro de dépôt international: PCT/FR2010/050364
(87) Numéro de publication internationale: WO 2010/100379

(56) Documents cités:
- WO-A-2007/077371
- US-A- 5 591 245
- US-A- 5 974 834
- US-A1- 2004 107 729
- US-A1- 2004 129 028
- US-A1- 2007 026 238

## Description

L'invention concerne un procédé de formage d'un vitrage comprenant une ou plusieurs ouverture(s) et pouvant notamment faire office de toit d'un véhicule automobile.

La réalisation de pavillons (« canopy » en anglais) fixes en verre de véhicules automobile présente un certain nombre d'avantages comme l'esthétique, le coût, la transparence, la possibilité d'équiper le toit de cellules photovoltaïques, etc. On peut vouloir ajouter une fonction ouvrante à ce type de pavillon en le munissant d'une fenêtre accessible et ouvrable de l'intérieur du véhicule. Ceci nécessite de savoir réaliser le bombage d'un vitrage muni d'un orifice de grande ouverture sans que ledit orifice ne le fragilise inconsidérément ni ne modifie de façon ostensible ses courbures générales, ce qui nuirait à l'esthétique, à la fonctionnalité du produit, et pourrait produire des défauts optiques. Une des difficultés majeures consiste à garantir les tolérances serrées de l'ouverture intérieure par rapport au contour extérieur du vitrage pour satisfaire le raccordement avec le toit mobile. De plus, un tel vitrage doit résister suffisamment aux forces exercées par le vent (effet « windload ») qui le sollicite fortement au roulage toit ouvert ou fermé. Il doit aussi résister à une charge telle qu'un mètre de neige. Un autre type de sollicitations sont les effets de torsion qui apparaissent par exemple lorsqu'une roue du véhicule repose sur un trottoir ou dans le cas de la montée brutale sur le trottoir. On a constaté l'apparition de contraintes d'extension dans les coins de l'ouverture dans le toit lorsque le vitrage est soumis à tout type d'effort mécanique.

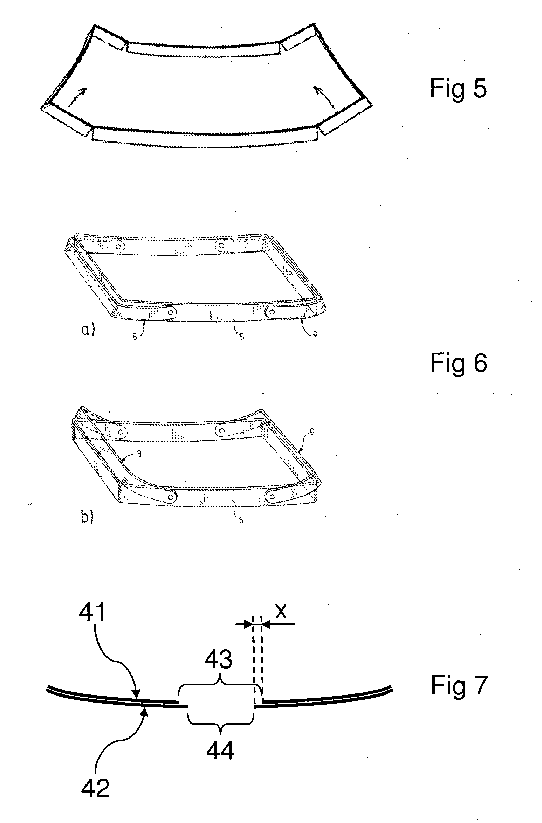

Le US5974834 enseigne le bombage et la trempe d'un vitrage comprenant un trou de faible taille, essentiellement pour faire office de lunette arrière de véhicule automobile. Un tel orifice en lunette arrière sert essentiellement à la fixation d'une antenne ou d'un feu stop, de sorte que son aire est au maximum de l'ordre de 0,006 m². Le bombage d'une feuille de verre individuelle est réalisé par gravité sur un cadre comprenant un support additionnel pour la bordure de l'orifice. Ce support additionnel est cranté à son bord (comme enseigné également par WO93/02017 ou US5118335 en ce qui concerne la bordure externe d'un vitrage sans trou) de façon à rendre plus accessible le bord du verre à l'air de trempe. Le bord du vitrage est censé venir en plein milieu du crantage comme le montre la figure 5 du US5118335. Selon US5974834 le support peut aussi être une plaque métallique pleine d'aire plus grande que l'orifice de façon à supporter les bords de l'orifice pendant le bombage et la trempe. Un cadre de bombage de lunette arrière de véhicule automobile présente généralement une largeur de contact de plus de 5 cm.

Des essais menés par la demanderesse ont montré que ce type de supportage des bords de l'ouverture n'était pas de nature à mener à un vitrage suffisamment solide, en particulier pour l'application « pavillon à toit ouvrant intégré ». Notamment un support cranté semble mener à une succession de compressions et d'extensions dans la bordure du vitrage, ce qui en fait le fragilise considérablement et de plus engendre des défauts optiques rédhibitoires.

Dans le cadre de la présente invention, afin de donner à la bordure de l'ouverture une résistance suffisante, on a décidé de lui conférer une ceinture de compression, ce qui signifie que l'extrême bord de l'ouverture est systématiquement en compression pour tout le périmètre de l'ouverture. De plus, on a cherché à donner à cette compression une valeur élevée d'au moins 4 MPa, et de préférence au moins 6 MPa, et de manière encore préférée au moins 8 MPa, et de manière encore préférée au moins 9 MPa en tout endroit du périmètre de l'ouverture. Ces valeurs concernent en premier lieu la feuille de verre en contact avec l'environnement extérieur du véhicule automobile et de préférence également l'autre ou les autres feuilles contenus dans le vitrage feuilleté, et donc aussi la moyenne arithmétique des valeurs de contrainte de toutes les feuilles du vitrage.

Pour atteindre ce but, on a trouvé que le support de la bordure de l'ouverture au moins au moment du commencement du refroidissement était avantageusement continu (ou linéaire, par opposition à « cranté » comme dans US5974834) et parallèle au bord du vitrage. Cela implique qu'en tout point de la bordure du support de l'ouverture, la tangente au support ne traverse jamais l'intérieur dudit support, ce qui n'est pas le cas du cadre « cranté » de l'art antérieur. De plus, le support de l'ouverture doit être relativement fin et être placé à quelques mm, généralement au moins 2 mm et même au moins 3 mm du bord de l'ouverture du vitrage qu'il supporte en fin de supportage. Ce type de support est souvent désigné par le terme « squelette ». Un squelette est une fine bande de métal présentant une de ses tranches vers le haut pour supporter le verre, l'épaisseur de ladite tranche allant généralement de 1 à 5 mm et plus généralement de 2 à 3,5 mm. En fin de bombage, le squelette est en contact continu sur la tranche avec le verre (pour l'étape de bombage faisant intervenir le squelette en question). Les squelettes sont de préférence revêtus d'un matériau fibreux du type feutre ou toile de fibres réfractaires métalliques et/ou céramique, comme cela est bien connu de l'homme du métier. Ces feutres réduisent le marquage du verre. Ce matériau fibreux présente généralement une épaisseur allant de 0,3 à 1 mm.

Comme pour la bordure de l'ouverture, la bordure extérieure (ou externe) du vitrage présente également, de préférence, une ceinture de compression d'au moins 4 MPa, et de préférence au moins 6 MPa, et de préférence au moins 8 MPa, et de manière encore préférée au moins 9 MPa en tout endroit du périmètre de la feuille de verre. Pour atteindre ces valeurs, on supporte la périphérie de la feuille par un squelette au moins au début du refroidissement comme cela a déjà été expliqué pour l'ouverture. Ces valeurs concernent en premier lieu la feuille de verre en contact avec l'environnement extérieur du véhicule automobile (donc la feuille directement en contact avec le squelette) et de préférence également l'autre ou les autres feuilles contenus dans le vitrage feuilleté, et donc aussi la moyenne arithmétique des valeurs de contrainte de toutes les feuilles du vitrage.

Le procédé selon l'invention comprenant un bombage suivi d'un refroidissement est tel que défini dans la revendication 1.

Le refroidissement est réalisé au moins au début sur squelette, tant au niveau de la bordure de l'ouverture qu'à celui de la bordure extérieure du vitrage. Le squelette supportant le verre au début du refroidissement est appelé « squelette final », étant entendu que ce squelette final peut être aussi squelette de bombage et en particulier le dernier squelette de bombage en contact avec le verre pour le cas de l'utilisation d'un squelette multiple. Ainsi, l'intégralité du bombage et du refroidissement peut être réalisé sur le même squelette.

Ainsi, l'invention concerne en premier lieu un procédé de préparation d'une feuille de verre bombée comprenant une ouverture comprenant un bombage suivi d'un refroidissement, la périphérie de la feuille et la périphérie de l'ouverture étant soutenue au moins au début du refroidissement par un squelette (dit « final »). Avantageusement, le squelette final est à une distance du bord de l'ouverture de la feuille avec laquelle il est en contact, d'au moins 2 mm et plus généralement au moins 3 mm, par exemple au moins 5 mm, au moins au début du refroidissement, c'est-à-dire avec la forme finale de la feuille. Le squelette final est, au moins au début du refroidissement, en contact continu sur la tranche avec le verre.

Le procédé selon l'invention est bien adapté aux vitrages de toutes tailles et même ceux de grande dimension pouvant faire office de toit de véhicule automobile. Par vitrage de grande dimension, on entend ceux dont une face fait plus de 0,8 m², voir plus de 1 m², voir même plus de 2 m² (bien entendu, il s'agit de l'aire totale d'une face principale comprenant la surface de verre + la surface de toute ouverture). Les vitrages de grande dimension sont particulièrement lourds et l'on aurait pu penser que les supports auraient laissé des marques. Cette crainte est d'autant plus forte que pour un vitrage feuilleté, les deux feuilles sont bombées en même temps, superposées sur le support de bombage. Le poids augmente donc très vite avec l'augmentation d'une dimension du vitrage, ce qui va dans le sens de l'augmentation du risque de marquage. Si une ouverture dans le vitrage entraîne en soi une difficulté de réalisation au niveau du bombage et une diminution de la résistance mécanique du vitrage final, paradoxalement, une plus grande ouverture peut présenter des avantages si l'on a choisi de supporter la périphérie de l'ouverture lors du bombage et au-debut du refroidissement. En effet, a) le poids du vitrage est d'autant plus réduit que l'ouverture est grande, ce qui va dans le sens d'une réduction du marquage, et b) plus l'ouverture est grande plus son périmètre est grand et donc plus la surface de support de son périmètre est grand, ce qui conduit à répartir le vitrage sur une plus grande surface de support, ce qui va aussi dans le sens d'une réduction du marquage. Ainsi, de préférence, l'ouverture présente une aire supérieure à 0,03 m² et même supérieure à 0,05 m² et même supérieure à 0,08 m², et même supérieure à 0,1 m² et même supérieure à 0,2 m² et généralement supérieure à 0,3 m². Généralement, l'ouverture présente une aire inférieure à 1 m². De préférence, l'ouverture présente une aire supérieure à 5% voire même supérieure à 10% de l'aire totale du vitrage (bien entendu de l'aire totale d'une seule face principale comprenant la surface de verre + celle de l'ouverture). Généralement, l'ouverture présente une aire inférieure à 80% voire même inférieure à 50% de l'aire totale du vitrage.

On a pu mettre en évidence qu'une ouverture de trop petite taille (inférieure à 0,03 m²) n'était pas favorable au refroidissement des bordures de l'ouverture, de sorte que les contraintes de bord souhaitées pouvaient ne pas être atteintes. En effet, il semble qu'une trop petite ouverture entraîne un effet de masse défavorable à un refroidissement efficace en raison de l'importance de la masse de verre entourant l'ouverture. Plus l'ouverture est grande, plus le refroidissement se passe de façon similaire à celui conféré aux bordures extérieures du vitrage, de sorte que le dernier soutien de la bordure de l'ouverture au commencement du refroidissement peut effectivement être réalisé par un support du type squelette sans que cela n'ai de conséquences néfastes au niveau des contraintes de bord.

Le refroidissement peut-être effectué sur les feuilles superposées auquel cas il est relativement lent. Dans ce cas, on descend la température du verre de la température de bombage par gravité jusqu'à 480°C à une vitesse contrôlée généralement inférieure à 3°C par seconde et généralement supérieure à 0,2 °C par seconde. En-dessous de 480°C, on peut souffler sur le verre pour accélérer le refroidissement. La superposition des feuilles ne gêne pas l'obtention des contraintes de bord souhaitées sur chacune des feuilles prises individuellement. Le refroidissement peut être plus rapide jusqu'à constituer une semi-trempe, auquel cas on procède à ce refroidissement feuille à feuille individuellement et non pas avec les feuilles superposées. Dans ce cas, on descend la température du verre de la température de bombage par gravité jusqu'à 480°C à une vitesse généralement supérieure à 10°C par seconde et généralement inférieure à 150°C par seconde. Dans tous les cas, le refroidissement commence alors que le verre est encore en contact avec le squelette final et ce refroidissement est réalisé suffisamment rapidement pour obtenir la ceinture de compression avec la valeur de contrainte de compression souhaitée (au moins 4 MPa) au moins pour la feuille de verre en contact direct avec le squelette et de préférence pour l'autre (ou les autres) feuille(s) qui lui est (sont) juxtaposé(es). Plus le refroidissement est réalisé rapidement, plus on augmente la valeur de la contrainte de compression dans la ceinture de compression. Ceci vaut pour le bord de l'ouverture comme pour le bord extérieur du vitrage.

Selon l'invention, le procédé peut s'appliquer à deux feuilles superposées pendant le bombage et le refroidissement, voire plus de deux feuilles.

Pour des feuilles destinées à être assemblées au sein du même vitrage feuilleté, le bombage lui-même peut être réalisé simultanément sur lesdites feuilles superposées. Ce bombage peut aussi être réalisé feuille par feuille (feuilles individuelles non superposées) pour le cas ou la dernière étape de bombage est réalisé par pressage contre une forme pleine. Dans tous les cas, on préfère cependant effectuer au moins le début de refroidissement sur le squelette final alors que ces feuilles destinées à être assemblées sont superposées.

De préférence, le périmètre de l'ouverture ne présente pas de rayon de courbure inférieure à 15 mm et de préférence pas de rayon de courbure inférieure à 60 mm, par exemple pas de rayon de courbure inférieure à 80 mm. Le périmètre de l'ouverture présente donc en tout endroit un rayon de courbure d'au moins 15 mm et de préférence d'au moins 60 mm, par exemple d'au moins 80 mm. L'ouverture peut par exemple être circulaire ou du type quadrilatère dont les coins présentent un rayon de courbure comme il vient d'être dit. Cette caractéristique sur les rayons de courbure est particulièrement favorable à la tenue du vitrage soumis à des torsions et à des contraintes d'extension dans les coins.

L'invention concerne également un procédé de bombage par gravité d'une feuille de verre (ce qui recouvre la possibilité d'avoir plusieurs feuilles de verre superposées, notamment deux) comprenant une ouverture (ce qui recouvre la possibilité d'avoir plusieurs ouvertures dans le même vitrage), la périphérie de l'ouverture étant soutenue pendant le bombage par un squelette de bombage.

Le squelette de bombage comprend une partie soutenant la périphérie du vitrage (ou périphérie « extérieure » ou « externe ») et une partie soutenant la périphérie de l'ouverture. Il en est de même pour le squelette final.

La partie du squelette supportant l'ouverture peut être fixe ou articulé ou multiple. De préférence, cette partie est modifiée au cours du bombage de sorte que sa concavité vue de dessus augmente au cours du bombage. Cette modification de forme permet de mieux suivre l'évolution de la courbure au cours du bombage de sorte que le poids du verre se répartit sur une plus grande surface de support plus longtemps. On réduit ainsi la tendance au marquage et l'on diminue le risque de contre-bombage (formation localement d'une courbure inverse à celle souhaitée). L'augmentation de concavité du squelette peut-être obtenue par un squelette articulé ou multiple. Un squelette articulé est muni de plusieurs parties articulées entre elle et dont la géométrie est modifiée au cours du bombage. De préférence, l'articulation est commandée de façon progressive (par opposition à de façon brusque) au cours du bombage.

Un squelette multiple comprend plusieurs squelettes simples (généralement deux), de concavités différentes, venant supporter l'un après l'autre (le plus concave après le moins concave, vu de dessus) sensiblement la même ligne de support (ou des lignes très voisines, juxtaposées). On appelle souvent le squelette de bombage supportant en premier le verre « ébaucheur » et le squelette de bombage supportant en dernier le verre « finisseur ».

La partie du squelette de bombage supportant la bordure extérieure de la feuille peut être du même type que celle utilisée pour supporter la bordure de l'ouverture ou de type différent. Dans tous les cas, il est du type simple, articulé ou multiple. Le type de squelette est à choisir en fonction de la complexité de la forme de la feuille et des tolérances sur les cotes.

Si la géométrie de la feuille est difficile à réaliser (fortes courbures dans toutes les directions et/ou tolérances serrées), on utilise avantageusement comme squelette supportant la bordure extérieure et la bordure de l'ouverture un squelette dont les deux parties sont du type multiple. Dans le cas de parties de squelette multiple double, elles comprennent chacune (celle pour le bord externe et celle pour le bord de l'ouverture) deux squelettes simples aux courbures différentes venant supporter le vitrage l'un après l'autre, le squelette à plus faible courbure supportant le vitrage en premier.

Dans tous les cas, la dernière forme du squelette de bombage épouse entièrement le verre tant au niveau de la périphérie de l'ouverture qu'à celui de la périphérie de la feuille. Il en est de même pour le squelette final en contact avec le verre au début du refroidissement.

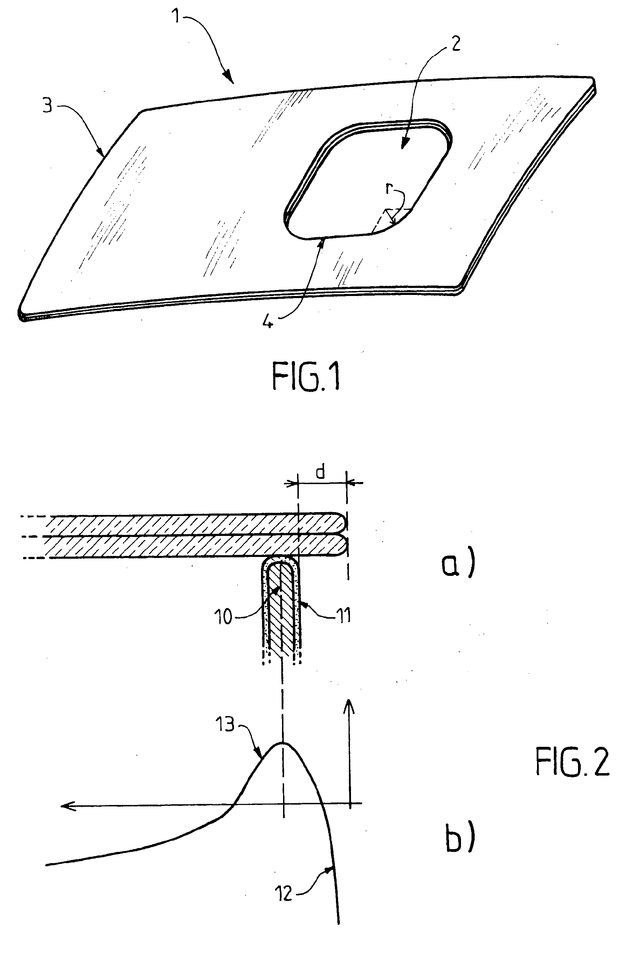

Le squelette final supportant le bord de l'ouverture présente une forme sensiblement identique à l'ouverture de la feuille avec laquelle elle est en contact, tout en respectant un retrait (« d » sur la figure 2a) de quelques mm, généralement au moins 2 mm, voire au moins 3 mm au moment du début du refroidissement, c'est-à-dire quand la feuille est figée dans sa forme finale par le refroidissement (les feuilles sont donc bombées à ce moment là, ce qui n'est pas représenté sur la figure 2a). Le squelette supportant le bord de l'ouverture a donc généralement la même forme que l'ouverture, agrandie de la valeur du retrait « d » sur tout son périmètre. Le squelette suit la forme de l'ouverture sur tout son périmètre en conservant sensiblement la même distance du bord de l'ouverture.

L'ouverture dans le verre n'arrive pas trop près de la bordure extérieure du vitrage car cela pourrait le fragiliser inconsidérément, notamment lors des opérations de manutention. Ainsi, l'ouverture est à au moins 50 mm et de préférence au moins 100 mm, voire au moins 150 mm de la bordure extérieure du vitrage.

L'ouverture est généralement réalisée sur les feuilles individuelles avant bombage et donc à l'état plat. La découpe de l'ouverture est généralement réalisée par jet d'eau sous pression. Les bords découpés (bord externe comme bord de l'ouverture) sont soumis à un bon façonnage entre l'étape de découpe et celle de bombage.

Avant association dans un vitrage feuilleté, une ou plusieurs des feuilles destinées à le composer peuvent être revêtues d'émail. Dans le cas d'un pavillon de véhicule automobile associant deux feuilles de verre séparées par une couche de polymère comme le polyvinyle butyrale (PVB), de l'émail peut être mis notamment sur la face concave (donc tournée vers l'intérieur du véhicule) de l'une ou l'autre des deux feuilles. Cet émail est déposé sur le verre avant bombage.

Le bombage peut être réalisé sur les feuilles prises individuellement ou sur les feuilles à l'état superposé. Dans tout les cas, le bombage par gravité est réalisé avec un verre dont la température est comprise entre 600 et 700°C et de préférence entre 550 et 650°C.

Le bombage par gravité sur squelette peut être une étape préliminaire de bombage que l'on fait suivre par une étape de bombage par pressage contre une forme pleine concave ou convexe. Ce bombage par pressage est généralement réalisé entre 600 et 620°C. Dans ce cas, afin de retrouver les valeurs de compression de bord souhaitées (au moins 4 MPa), après bombage par pressage, on repose les bordures du verre (bord extérieur et bord de l'ouverture) sur le « squelette final » à chaud (température du verre: entre 600 et 700°C C et de préférence entre 550 et 650°C) et l'on commence le refroidissement alors que le verre repose sur ce squelette final. C'est en effet le contact de la bordure du verre avec le squelette final au début du refroidissement qui est à l'origine de l'excellente compression de bord observée. Selon que l'on veut un verre semi-trempé ou non, on réalise le refroidissement comme il a déjà été dit plus haut.

Si l'on réalise le bombage par gravité avec deux feuilles superposées, la feuille du dessus peut présenter une ouverture un peu plus grande que celle du dessous, de sorte que la bordure de la feuille du dessus soit partout un peu en retrait par rapport à la bordure de la feuille du dessous, ce retrait (« x » sur la figure 7) étant de préférence compris entre 0 et 15 mm, notamment 3 et 10 mm. Ce décalage des ouvertures des deux feuilles permet d'assurer un refroidissement un peu plus efficace à la feuille du dessous qui voit alors ses contraintes de bord augmenter. Cette feuille du dessous lors du bombage devient celle du dessus du pavillon de véhicule automobile et il peut être souhaité qu'elle ait des contraintes de bord particulièrement élevées.

Les feuilles de verre concernées par la présente invention ont généralement une épaisseur allant de 1 à 4 mm.

La figure 1 représente le type de vitrage concerné par la présente invention. Il s'agit d'un vitrage feuilleté 1 comprenant deux feuilles de verre entre lesquelles est insérée une fine couche de polymère du type PVB. Ce vitrage est bombé et présente une ouverture 2 dont la surface représente environ 20 % de la surface totale du vitrage. Ce vitrage comprend 2 faces principales. Ce vitrage peut faire office de toit ouvrant de véhicule automobile, l'ouverture pouvant être munie d'un volet articulé. Ce vitrage comprend une bordure extérieure 3 et l'ouverture 2 comprend une bordure 4. L'ouverture 2 présente un périmètre du type quadrilatère dont les quatre coins présentent d'assez grands rayons de courbure r.

La figure 2 a) représente en coupe deux feuilles de verre superposées et portées par un support 10 du type squelette recouvert d'un feutre 11 de fibres réfractaires. Le squelette est à une distance d (« retrait ») du bord du verre. La figure 2b) représente l'allure de la distribution des contraintes qui en résulte dans chacune des feuilles finales. Ce schéma correspond à la mesure des contraintes intégrées par le « sharples », outils de mesure couramment utilisé par l'homme du métier pour mesurer les contraintes. On voit que l'extrême bord des feuilles de verre est entièrement en compression car la partie 12 de la courbe des contraintes est négative et est donc dans le domaine de compression. Par contre, la zone du verre qui était juste au-dessus du support 10 est en extension, car la partie 13 de la courbe des contraintes est positive.

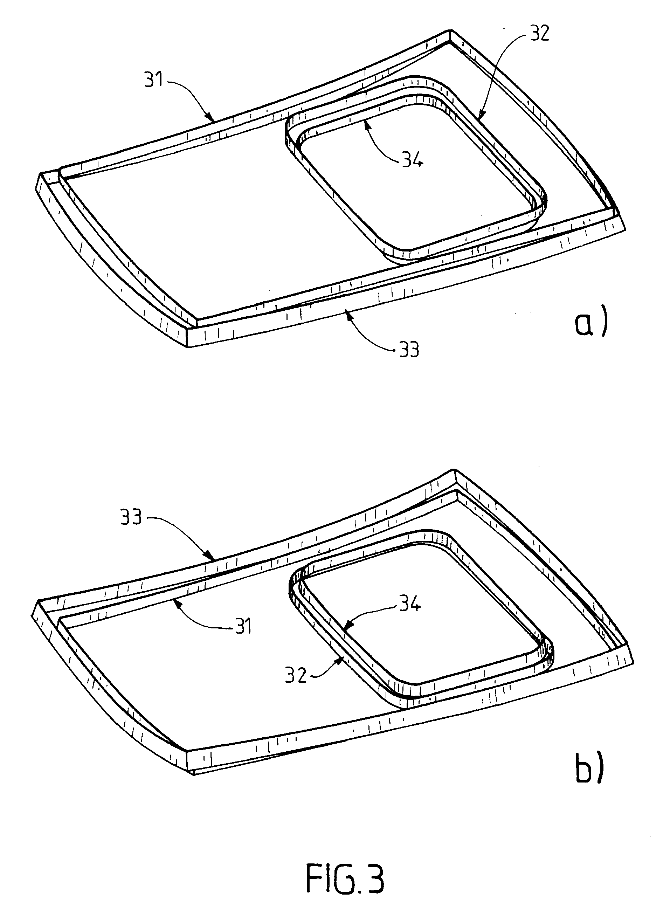

La figure 3 représente un dispositif pour le bombage par gravité de feuilles de verre comprenant un double squelette en deux parties, une partie (31, 33) pour supporter la périphérie des feuilles de verre et une partie (32, 34) pour supporter la périphérie de l'ouverture. Chaque composant 31, 32, 33 et 34, est un squelette simple en soi. En figure 3a), c'est l'ébaucheur qui est en position haute, c'est-à-dire à la fois d'une part l'ébaucheur supportant la périphérie du vitrage et d'autre part l'ébaucheur supportant la périphérie de l'ouverture. Les squelettes finisseurs 33 et 34, respectivement pour la périphérie du vitrage et pour la périphérie de l'ouverture sont en position basse, sans contact possible avec le verre. Au bout d'un certain temps de bombage, les squelettes ébaucheur sont abaissés de façon progressive, et le verre (non représenté) devient supporté par les squelettes finisseurs 33 et 34 comme représenté par la figure 3b. En fait, les squelettes ébaucheurs 31 et 32 sont reliés entre eux par des liaisons fixes et les squelettes finisseurs 33 et 34 sont aussi reliés entre eux par des liaisons fixes. Le passage des squelettes ébaucheurs aux squelettes finisseurs est très progressif et réalisé grâce un dispositif tel que représenté aux figures 1 à 5 du W02007/077371.

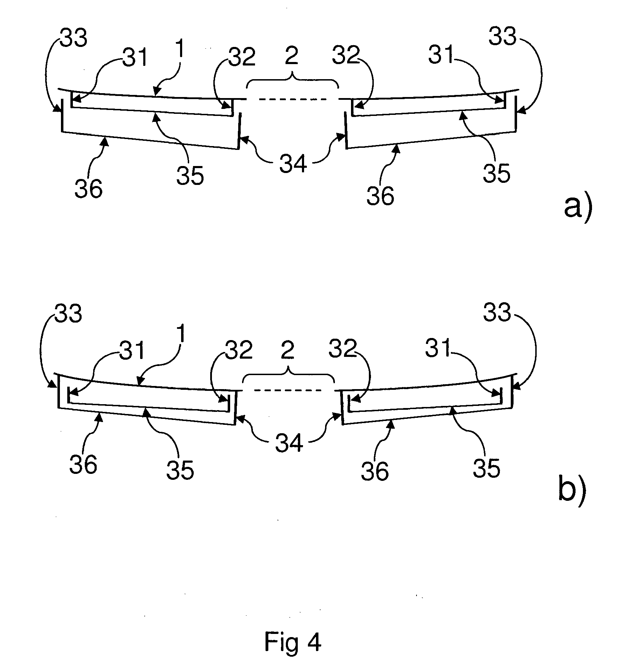

La figure 4 montre le mouvement relatif des deux couples de squelettes, le couple de squelettes ébaucheurs (31,32) et le couple de squelettes finisseurs (33,34), au cours du bombage d'une feuille de verre 1 muni d'une ouverture 2. En Figure 4a), la feuille de verre 1 muni d'une ouverture 2 repose sur le couple d'ébaucheurs, l'ébaucheur 31 supportant la périphérie de la feuille et l'ébaucheur 32 supportant la périphérie de l'ouverture 2. En Fig 4b), la feuille de verre 1 muni d'une ouverture 2 repose sur le couple de finisseurs, le finisseur 33 supportant la périphérie de la feuille et le finisseur 34 supportant la périphérie de l'ouverture 2. L'ébaucheur 31 et l'ébaucheur 32 sont solidaires du fait de leurs liaisons fixes 35. le finisseur 33 et le finisseur 34 sont solidaires du fait de leurs liaisons fixes 36.

La figure 5 représente un squelette articulé pouvant être utilisé pour supporter le verre autour de l'ouverture. Ce squelette comprend 2 parties latérales articulées pouvant être relevées au cours du bombage. On considère que ce mouvement fait globalement augmenter la courbure ou la concavité (vu de dessus) du squelette. Le squelette venant en contact avec la périphérie du vitrage n'est ici pas représenté.

La figure 6 représente un squelette multiple articulé comprenant un premier squelette 5 simple pour supporter le périmètre de l'ouverture en début de bombage, deux parties latérales articulées 8 et 9 pouvant être relevées en cours de bombage. On considère que ce mouvement fait globalement augmenter la courbure ou la concavité (vu de dessus) du squelette. Le squelette venant en contact avec la périphérie du vitrage n'est ici pas représenté.

La figure 7 représente deux feuilles de verre 41 et 42 superposées lors du bombage (les squelettes supports ne sont pas représentés) la feuille du dessus 41 présentant une ouverture 43 un peu plus grande que la feuille du dessous 42, de sorte que la bordure de la feuille du dessus est partout en retrait de la bordure 44 de la feuille du dessous de x mm. Ce décalage des ouvertures des deux feuilles permet d'assurer un refroidissement un peu plus efficace à la feuille du dessous qui voit alors ses contraintes de bord augmenter.

## Revendications

1. Procédé de préparation d'une feuille de verre (1) bombée comprenant une ouverture (2) comprenant un bombage suivi d'un refroidissement, ledit bombage étant réalisé au moins partiellement par gravité, **caractérisé en ce que** la périphérie de la feuille (3) et la périphérie de l'ouverture (4) sont soutenues au moins au début du refroidissement par un squelette dit final (33,34), ledit squelette étant une bande linéaire de métal présentant une de ses tranches vers le haut pour supporter le verre.

2. Procédé selon la revendication précédente, **caractérisé en ce que** l'épaisseur de ladite tranche va de 1 à 5 mm.

3. Procédé selon l'une des revendications précédentes, **caractérisé en ce que** le bombage est réalisé au moins partiellement par gravité sur un squelette de bombage soutenant la périphérie de la feuille et la périphérie de l'ouverture.

4. Procédé selon l'une des revendications précédentes, **caractérisé en ce que** la partie du squelette de bombage soutenant la périphérie de l'ouverture voit sa concavité augmenter au cours du bombage.

5. Procédé selon la revendication précédente, **caractérisé en ce que** la partie du squelette de bombage soutenant la périphérie de l'ouverture comprend deux squelettes (32,33) soutenant l'ouverture l'un après l'autre au cours du bombage.

6. Procédé selon l'une des revendications précédentes, **caractérisé en ce que** le squelette final est à une distance du bord de l'ouverture d'au moins 2 mm au moins au début du refroidissement.

7. Procédé selon la revendication précédente, **caractérisé en ce que** le squelette final a la forme de l'ouverture sur tout son périmètre en conservant sensiblement la même distance du bord de l'ouverture.

8. Procédé selon l'une des revendications précédentes **caractérisé en ce que** le périmètre de l'ouverture (4) à en tout endroit un rayon de courbure d'au moins 15 mm.

9. Procédé selon la revendication précédente, **caractérisé en ce que** le périmètre de l'ouverture (4) à en tout endroit un rayon de courbure d'au moins 60 mm.

10. Procédé selon l'une des revendications précédentes, **caractérisé en ce que** le refroidissement est réalisé suffisamment rapidement pour obtenir une valeur de contrainte de compression à la bordure de l'ouverture d'au moins 4 MPa et de préférence au moins 6 MPa.

11. Procédé selon la revendication précédente, **caractérisé en ce que** le refroidissement est réalisé suffisamment rapidement pour obtenir une valeur de contrainte de compression à la bordure (4) de l'ouverture (2) d'au moins 8 MPa et de préférence au moins 9 MPa.

12. Procédé selon l'une des revendications précédentes, **caractérisé en ce que** l'ouverture (2) présente une aire supérieure à 0,03 m² et même supérieure à 0,05 m².

13. Procédé selon la revendication précédente, **caractérisé en ce que** l'ouverture (2) présente une aire supérieure à 0,08 m², et même supérieure à 0,1 m² et même supérieure à 0,2 m².

14. Procédé selon l'une des revendications précédentes, **caractérisé en ce que** l'ouverture (2) présente une aire supérieure à 5% voire même supérieure à 10% de l'aire totale d'une face principale de la feuille.

15. Procédé selon l'une des revendications précédentes, **caractérisé en ce que** le squelette final (33,34) est aussi squelette de bombage.

16. Procédé selon l'une des revendications précédentes, **caractérisé en ce que** la partie du squelette de bombage soutenant la périphérie de la feuille comprend deux squelettes soutenant la feuille l'un après l'autre au cours du bombage, celui la soutenant en second (34) présentant une courbure plus prononcée que celui la soutenant en premier (32).

17. Procédé selon l'une des revendications précédentes, **caractérisé en ce que** deux feuilles sont superposées pendant le bombage et le refroidissement.

## Claims

1. A method for preparing a sheet of curved glass (1) comprising an opening (2) involving bending followed by cooling, said bending being performed at least partially under gravity, **characterized in that** the periphery of the sheet (3) and the periphery of the opening (4) are supported, at least at the start of cooling, by a skeleton known as the final skeleton (33, 34), said skeleton being a linear strip of metal having one of its edge faces facing upward to support the glass.

2. The method as claimed in the preceding claim, **characterized in that** the thickness of said edge face ranges from 1 to 5 mm.

3. The method as claimed in one of the preceding claims, **characterized in that** the bending is performed at least partially under gravity on a bending skeleton supporting the periphery of the sheet and the periphery of the opening.

4. The method as claimed in one of the preceding claims, **characterized in that** that part of the bending skeleton that supports the periphery of the opening sees its concavity increase during bending.

5. The method as claimed in the preceding claim, **characterized in that** that part of the bending skeleton that supports the periphery of the opening comprises two skeletons (32, 33) which support the opening one after the other during the course of the bending.

6. The method as claimed in one of the preceding claims, **characterized in that** the final skeleton lies a distance away from the edge of the opening of at least 2 mm at least at the start of cooling.

7. The method as claimed in the preceding claim, **characterized in that** the final skeleton has the shape of the opening around its entire perimeter keeping substantially the same distance away from the edge of the opening.

8. The method as claimed in one of the preceding claims, **characterized in that** the perimeter of the opening (4) has, at all points, a radius of curvature of at least 15 mm.

9. The method as claimed in the preceding claim, **characterized in that** the perimeter of the opening (4) has, at all points, a radius of curvature of at least 60 mm.

10. The method as claimed in one of the preceding claims, **characterized in that** the cooling is performed sufficiently rapidly to obtain a compressive stress value around the border of the opening of at least 4 MPa and preferably at least 6 MPa.

11. The method as claimed in the preceding claim, **characterized in that** the cooling is performed sufficiently rapidly to obtain a compressive stress value at the border (4) of the opening (2) of at least 8 MPa and preferably at least 9 MPa.

12. The method as claimed in one of the preceding claims, **characterized in that** the opening (2) has an area in excess of 0.03 m² and even in excess of 0.05 m².

13. The method as claimed in the preceding claim, **characterized in that** the opening (2) has an area in excess of 0.08 m² and even in excess of 0.1 m² and even in excess of 0.2 m².

14. The method as claimed in one of the preceding claims, **characterized in that** the opening (2) has an area in excess of 5% or even in excess of 10% of the total area of a main face of the sheet.

15. The method as claimed in one of the preceding claims, **characterized in that** the final skeleton (33, 34) is also a bending skeleton.

16. The method as claimed in one of the preceding claims, **characterized in that** that part of the bending skeleton that supports the periphery of the sheet comprises two skeletons which support the sheet one after the other during the course of the bending, the one that supports it second (34) having a more pronounced curvature than the one that supports it first (32).

17. The method as claimed in one of the preceding claims, **characterized in that** two sheets are superposed during the bending and cooling.

## Patentansprüche

1. Verfahren zur Herstellung einer gewölbten Glasscheibe (1), die eine Öffnung (2) aufweist, umfassend ein Biegen, an das sich ein Abkühlen anschließt, wobei das Biegen wenigstens teilweise mittels Schwerkraft vollzogen wird, **dadurch gekennzeichnet, dass** der Umfang der Scheibe (3) und der Umfang der Öffnung (4) wenigstens zu Beginn des Abkühlens durch ein sogenanntes Abschlussskelett (33, 34) gestützt werden, wobei das Skelett ein lineares Metallband ist, dessen einer Rand nach oben weist, um das Glas zu unterstützen.

2. Verfahren nach dem vorstehenden Anspruch, **dadurch gekennzeichnet, dass** die Dicke des Randes 1 bis 5 mm beträgt.

3. Verfahren nach einem der vorstehenden Ansprüche, **dadurch gekennzeichnet, dass** das Biegen wenigstens teilweise mittels Schwerkraft auf einem Biegeskelett, das den Umfang der Scheibe und den Umfang der Öffnung stützt, vollzogen wird.

4. Verfahren nach einem der vorstehenden Ansprüche, **dadurch gekennzeichnet, dass** sich die Konkavität des Teils des Biegeskeletts, der den Umfang der Öffnung stützt, im Laufe des Biegens vergrößert.

5. Verfahren nach dem vorstehenden Anspruch, **dadurch gekennzeichnet, dass** der Teil des Biegeskeletts, der den Umfang der Öffnung stützt, zwei Skelette (32, 33) umfasst, die die Öffnung im Laufe des Biegens nacheinander stützen.

6. Verfahren nach einem der vorstehenden Ansprüche, **dadurch gekennzeichnet, dass** sich das Abschlussskelett, wenigstens zu Beginn des Abkühlens, in einem Abstand von wenigstens 2 mm vom Rand der Öffnung befindet.

7. Verfahren nach dem vorstehenden Anspruch, **dadurch gekennzeichnet, dass** das Abschlussskelett die Form der Öffnung über ihren gesamten Umfang hat, unter Beibehalten im Wesentlichen des gleichen Abstandes vom Rand der Öffnung.

8. Verfahren nach einem der vorstehenden Ansprüche, **dadurch gekennzeichnet, dass** der Umfang der Öffnung (4) an jeder Stelle einen Krümmungsradius von wenigstens 15 mm aufweist.

9. Verfahren nach dem vorstehenden Anspruch, **dadurch gekennzeichnet, dass** der Umfang der Öffnung (4) an jeder Stelle einen Krümmungsradius von wenigstens 60 mm aufweist.

10. Verfahren nach einem der vorstehenden Ansprüche, **dadurch gekennzeichnet, dass** das Abkühlen schnell genug durchgeführt wird, um einen Druckspannungswert am Rand der Öffnung von wenigstens 4 MPa und vorzugsweise wenigstens 6 MPa zu erreichen.

11. Verfahren nach dem vorstehenden Anspruch, **dadurch gekennzeichnet, dass** das Abkühlen schnell genug durchgeführt wird, um einen Druckspannungswert am Rand (4) der Öffnung (2) von wenigstens 8 MPa und vorzugsweise wenigstens 9 MPa zu erreichen.

12. Verfahren nach einem der vorstehenden Ansprüche, **dadurch gekennzeichnet, dass** die Öffnung (2) eine Fläche von mehr als 0,03 m² und sogar mehr als 0,05 m² aufweist.

13. Verfahren nach dem vorstehenden Anspruch, **dadurch gekennzeichnet, dass** die Öffnung (2) eine Fläche von mehr als 0,08 m² und sogar mehr als 0,1 m² und sogar mehr als 0,2 m² aufweist.

14. Verfahren nach einem der vorstehenden Ansprüche, **dadurch gekennzeichnet, dass** die Öffnung (2) eine Fläche von mehr als 5 %, sogar mehr als 10 % der Gesamtfläche einer Hauptseite der Scheibe aufweist.

15. Verfahren nach einem der vorstehenden Ansprüche, **dadurch gekennzeichnet, dass** das Abschlussskelett (33, 34) auch Biegeskelett ist.

16. Verfahren nach einem der vorstehenden Ansprüche, **dadurch gekennzeichnet, dass** der Teil des Biegeskeletts, der den Umfang der Scheibe stützt, zwei Skelette umfasst, die die Scheibe im Laufe des Biegens nacheinander stützen, wobei dasjenige, das sie als zweites (34) stützt eine stärker ausgeprägte Krümmung aufweist als dasjenige, das sie als erstes (32) stützt.

17. Verfahren nach einem der vorstehenden Ansprüche, **dadurch gekennzeichnet, dass** während des Biegens und des Abkühlens zwei Scheiben übereinander gelegt werden.
